# EUROPÄISCHE PATENTSCHRIFT

(11) **EP 1 385 616 B1**
(45) Veröffentlichungstag und Bekanntmachung des Hinweises auf die Patenterteilung: **12.04.2006**
(21) Anmeldenummer: 02742906.7
(22) Anmeldetag: 20.04.2002
(51) Int. Cl.: B01J 13/18, B01J 13/20

(54) **VERFAHREN ZUR HERSTELLUNG VON MIKROKAPSELN MIT EINEM WASSERLÖSLICHE SUBSTANZEN ENTHALTENDEN KAPSELKERN**
PROCESS FOR THE PRODUCTION OF MICRO-CAPSULES COMPRISING A CAPSULE CORE CONTAINING WATER-SOLUBLE SUBSTANCES
PROCEDE DE FABRICATION DE MICROCAPSULES DONT LE COEUR CONTIENT DES SUBSTANCES SOLUBLES DANS L'EAU

(30) Priorität: 25.04.2001 DE 10120480; 25.06.2001 DE 10134491
(43) Veröffentlichungstag der Anmeldung: 04.02.2004
(73) Patentinhaber: BASF Aktiengesellschaft, 67056 Ludwigshafen (DE)
(72) Erfinder: WULFF, Dirk, 67105 Schifferstadt (DE); JAHNS, Ekkehard, 69469 Weinheim (DE); RÖCKEL, Harald, 67435 Neustadt (DE); SCHEHLMANN, Volker, 67105 Schifferstadt (DE)
(86) Internationale Anmeldenummer: PCT/EP2002/004378
(87) Internationale Veröffentlichungsnummer: WO 2002/085510

(56) Entgegenhaltungen:
- EP-A- 0 492 793
- EP-A- 0 974 394
- EP-A- 0 978 312
- US-A- 4 842 978
- US-A- 4 918 317
- US-A- 5 401 577

## Beschreibung

Die vorliegende Erfindung betrifft ein Verfahren zur Herstellung von Mikrokapseln mit einem wasserlösliche, organische Substanzen enthaltenden Kapselkern und einer Kapselhülle, die ein Kondensat aus Formaldehydharzen und/oder deren Alkylethern ist.

Mikrokapseln auf Melamin-Formaldehydharzbasis mit Farbbildnern enthaltenden Kernölen sind auf dem Gebiet der Durchschreibepapiere seit langem bekannt (siehe z.B. EP-A-0 026 914 und EP-A-0 218 887). Man erhält sie durch Polykondensation der sich in der wässrigen Phase befindlichen Harze einer Öl-in-Wasser-Emulsion.

Ferner sind aus der US-A-3418656 Mikrokapseln mit Melamin-Formaldehydharzkondensaten als Wandmaterial und einer Emulsion als Kern bekannt.

Die WO 91/10506 lehrt Mikrokapseln mit einem wässrigen Kern, deren Wände sich durch Reaktion einer wasserlöslichen Lewissäure wie Carboxymethylcellulose mit einer in der lipophilen Phase gelösten Lewisbase wie Benzalkoniumchlorid ausbilden. Verkapselt werden medizinische Wirkstoffe, die, da die Kapselwände nicht dicht sind, mit Verzögerung freigesetzt werden.

Die JP-60-244336 lehrt Mikrokapseln mit Wänden aus Hexamethoxyhexamethylol-Melaminharz. Das hydrophobe Melaminharz wird im Kernöl der Öl-in-Wasser-Emulsion polymerisiert.

Die Herstellung farbstoffenthaltender Polymerisate kann grundsätzlich auf zwei unterschiedliche Weisen erfolgen. Eine Vorgehensweise besteht darin, Farbstoffe, die in Polymeren, gegebenenfalls bei erhöhter Temperatur, eine hinreichende Löslichkeit aufweisen, in diesen homogen zu lösen. Der Vorteil hierbei liegt insbesondere in einer hohen Brillanz des Farbeindrucks und einer großen Farbstärke, d. h. einem niedrigen Farbstoffbedarf. Diese Vorgehensweise hat jedoch den Nachteil, dass die Farbstoffe bei thermischer Belastung oder bei Kontakt der Polymerisate mit Lösungsmitteln migrieren; dies bedingt reduzierte Wetter- und Migrationsechtheiten, da Farbstoffmoleküle, die an die Oberfläche des Substrates migriert sind, von Licht oder Sauerstoff angegriffen oder durch Lösungsmittel ausgespült werden. Die andere Vorgehensweise besteht darin, unlösliche Farbpigmente in der Polymermatrix dispers zu verteilen. Hierdurch vermeidet man die Nachteile, die bei homogener Lösung der Farbmittel in der Polymermatrix auftreten können. Nachteilig an dieser Vorgehensweise ist jedoch, dass die einzelnen Farbstoffmoleküle in den Pigmentkristallen miteinander wechselwirken, was zu einer Verbreiterung der Absorptionsbanden und damit zu einer unerwünschten Herabsetzung der Farbtonreinheit und der Farbstärke der Färbung führt. Ferner bedingt die Formanisotropie der Pigment-Kristallite, dass beim Einarbeiten in die polymere Matrix Rheologieprobleme, beispielsweise Thixotropien auftreten.

Die Nachteile beider Vorgehensweisen können grundsätzlich umgangen werden, wenn man als Ersatz für Farbpigmente farbstoffenthaltende Polymerisatdispersionen verwendet, die den Farbstoff in den Polymerisatteilchen homogen verteilt enthalten. Derartige "Pigmente" sollten sich zum einen durch eine hohe Farbbrillanz und Farbtonreinheit und zum anderen aufgrund der Kugelform der Polymerisatteilchen durch geringe Rheologieprobleme auszeichnen.

So beschreibt die WO 99/40123 wässrige Polymerisatdispersionen, die durch Emulsionspolymerisation von farbstoffhaltigen Monomerlösungen in wässriger Phase hergestellt werden.

Für Polymerisatdispersionen verwendete Farbstoffe sind hydrophob, da sie in den Monomeren bzw. im Polymer gelöst werden müssen. Damit ist jedoch die Auswahl der zur Verfügung stehenden Farbstoffe begrenzt.

Aufgabe der vorliegenden Erfindung war es, organische, wasserlösliche Substanzen, wie Farbstoffe, in einer Form zur Verfügung zu stellen, in der sie sich gegenüber Lösungsmitteln inert verhalten.

Demgemäß wurden die oben beschriebenen Mikrokapseln gefunden.

Die Kapseln umfassen eine Kapselhülle und einen Kapselkern. Der Kapselkern enthält mindestens eine wasserlösliche, organische Substanz als Feststoff und/oder herstellungsbedingt als Lösung in einem hydrophilen Lösungsmittel. Bevorzugt werden als Kapselkerne Lösungen der wasserlöslichen, organischen Substanz.

Das Grundprinzip der Kapselbildung ist, dass das in dem hydrophilen Lösungsmittel gelöste Formaldehydharz, das die hydrophile Phase einer Wasser-in-Öl-Emulsion ist, im Verlauf der Kondensation unlöslich wird und an die Grenzfläche der hydrophoben Phase wandert und dort die Kapselwand bildet.

Unter hydrophilem Lösungsmittel ist sowohl Wasser als auch solche wässrigen Lösungen zu verstehen, die außer Wasser bis zu 20 Gew.-% eines mit Wasser mischbaren organischen Lösungsmittels wie C₁- bis C₄-Alkanolen, insbesondere Methanol, Ethanol, Isopropanol oder einen cyclischen Ether wie Tetrahydrofuran enthalten.

Geeignete hydrophile Lösungsmittel sind ferner Ethylenglykol, Glycerin, Polyethylenglycole und Butylenglycol sowie ihre Mischungen. Bevorzugt werden als hydrophile Lösungsmittel Wasser und Mischungen dieser Lösungsmittel mit Wasser.

Als hydrophobe Phase der Wasser-in-Öl-Emulsion sind mit Wasser nur begrenzt mischbare Lösungsmittel geeignet, so dass eine Phasentrennung stattfindet. Als hydrophobe Lösungsmittel können praktisch alle mit Wasser nicht mischbaren Flüssigkeiten verwendet werden, die nicht in die Polykondensation eingreifen, also inert sind. Erfindungsgemäß geeignete Lösungsmittel sind bevorzugt Lösungsmittel mit einer Löslichkeit in Wasser bei 20°C von ≤ 65 g/l. Vorzugsweise verwendet man hierfür aliphatische und aromatische Kohlenwasserstoffe oder ihre Mischungen. Geeignete aliphatische Kohlenwasserstoffe sind beispielsweise Pentan, Hexan, Heptan, Octan, Nonan, Decan, Cyclohexan, Decalin, Methylcyclohexan, Isooctan und Ethylcyclohexan. Geeignete aromatische Kohlenwasserstoffe sind beispielsweise Benzol, Toluol, Xylol und Isopropylbenzol. Daneben ist es auch möglich, halogenierte Kohlenwasserstoffe wie Tetrachlorethan, Hexachlorethan, Trichlorethan und Chlorbenzol zu verwenden. Ferner sind aliphatische Ester wie Ethylacetat geeignet. Bevorzugt werden aliphatische Kohlenwasserstoffe und insbesondere Cyclohexan eingesetzt. Bevorzugt werden Lösungsmittel, deren Siedepunkt ≤ 120°C liegt, da sich diese Lösungsmittel im Falle einer Trocknung der Mikrokapsel vorteilhaft entfernen lassen.

Unter einer wasserlöslichen, organischen Substanz ist eine Verbindung auf Basis von Kohlenstoff zu verstehen, die zumindest teilweise in Wasser löslich ist. Die organische Substanz muß eine größere Affinität zur hydrophilen als zur hydrophoben Phase haben. Dies ist in der Regel dann gewährleistet, wenn die Substanz, bei Raumtemperatur eine Löslichkeit im hydrophilen Lösungsmittel von mindestens 1 g/l aufweist. Bevorzugt weisen die organischen Substanzen eine Löslichkeit ≥ 20 g/l im hydrophilen Lösungsmittel auf.

Bei den wasserlöslichen, organischen Substanzen handelt es sich beispielsweise um wasserlösliche Farbstoffe.

Der Begriff Farbstoff umfasst hier und im Folgenden organische Verbindungen oder Salze organischer Verbindungen sowie Charge-Transfer-Komplexe von organischen Verbindungen mit einem Chromophor, der ein Absorptionsmaximum im Wellenlängenbereich von 400 bis 850 nm aufweist und somit für das menschliche Auge einen Farbeindruck hervorruft (konventionelle Farbstoffe) und der gegebenenfalls auch selber Licht im sichtbaren Bereich emittiert (Fluoreszenzfarbstoffe). Farbstoffe im Sinne dieser Erfindung sind auch Verbindungen mit einem Absorptionsmaximum im Bereich von 250 bis 400 nm, die bei Bestrahlen mit UV-Licht eine Fluoreszensstrahlung im sichtbaren Bereich emittieren (optische Aufheller). Farbstoffe im Sinne dieser Erfindung sind weiterhin organische Verbindungen, die Licht der Wellenlänge < 400 nm absorbieren und strahlungslos deaktivieren (UV-Stabilisatoren).

In der Regel weisen die wasserlöslichen Farbstoffe ionische funktionelle Gruppen auf, welche die Löslichkeit im wässrigen Lösungsmittel verbessern. Die Modifizierung kann dabei kationisch oder anionisch erfolgt sein. Geeignete Substituenten sind beispielsweise Sulfonsäure-, Carbonsäure-, Phosphorsäurereste sowie Ammonium- und Alkylammoniumreste.

Erfindungsgemäß geeignete Farbstoffe umfassen verschiedene Farbstoffklassen mit unterschiedlichen Chromophoren, beispielsweise Monoazo- und Disazofarbstoffe, Triarylmethanfarbstoffe, Metallkomplexfarbstoffe, wie Phtalocyaninfarbstoffe, Chinophthalone und Methin- und Azamethinfarbstoffe.

Beispielhaft genannt seien die folgenden Nummern des Colour-Index:

Direct Yellow 4, 5, 11, 50, 127, 137, 147, 153; Acid Orange 7, 8; Direct Orange 15, 34, 102; Direct Red 81, 239, 252-255; Direct Violet 9, 51; Acid Blue 9, 86; Direct Blue 199, 218, 267, 273, 279, 281; Acid Black 194, 208, 210, 221; Direct Black 19, 161, 170 und 171;

Basic Red 1, Basic Red 14, Basic Blue 7, Basic Blue 11, Basic Blue 26, Basic Violet 1, Basic Violet 4, Basic Violet 10 etc.

Weiterhin zählen zu den Farbstoffen auch Komplexe aus basischen und sauren Farbstoffen bzw. Komplexe aus anionischen und kationischen Farbstoffen, beispielsweise der Komplex aus Chrysoidinbase und Metanilgelbsäure.

Erfindungsgemäß zählen zu den Farbstoffen auch optische Aufheller, die zumindest zum Teil in Wasser löslich sind.

Zu den organischen Farbstoffen zählen definitionsgemäß auch UVstrahlenabsorbierende Verbindungen (UV-Stabilisatoren), die die absorbierte Strahlung strahlungslos deaktivieren. Derartige Verbindungen werden häufig als UV-Absorber in Sonnenschutzmitteln eingesetzt. Hierzu zählen Derivate der p-Aminobenzoesäure, insbesondere ihre Ester; Salicylate, Cinnamate, Benzophenone, 2-Phenylbenzimidazol-4-sulfonsäure und deren Salze, Urocansäure, deren Salze und deren Ester, Benzoxazole, Benzotriazole, Benzylidenkampfer und seine Derivate.

Je nach Farbintensität des Farbstoffs enthält die Mikrokapsel in der Regel wenigstens 0,1 Gew.-% bezogen auf das hydrophile Lösungsmittel, vorzugsweise 1 bis 50 Gew.-% und insbesondere 5 bis 20 Gew.-% wenigstens eines Farbstoffs.

Die Kapselhülle der hergestellten Mikrokapseln ist ein Kondensat aus Formaldehydharzen und/oder deren Alkylethern. Formaldehydharze sind beispielsweise Reaktionsprodukte aus Formaldehyd mit
- Triazinen wie Melamin
- Carbamiden wie Harnstoff
- Phenole wie Phenol, m-Kresol und 3,5-Xylol
- Amino- und Amidoverbindungen wie Anilin, p-Toluolsulfonamid, Ethylenharnstoff und Guanidin,
oder ihren Mischungen.

Bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl-insbesondere Methylether dieser Formaldehydharze sowie die Mischungen mit diesen Formaldehydharzen. Insbesondere werden Melamin-Formaldehyd-Harze und/oder deren Methylether bevorzugt. Ein bevorzugter Ausgangsstoff für das Wandmaterial sind Melamin-Formaldehyd-Harze und/oder deren Methylether, mit einem Verhältnis von Melamin:Formaldehyd von 1:1,5 bis 1:8 im Harz, vorzugsweise 1:3 bis 1:6. Diese Harze sind N-Methylolmelaminverbindungen oder deren Methylether. Die für das erfindungsgemäße Verfahren verwendeten Harze müssen mit dem hydrophilen Lösungsmittel in jedem Verhältnis mischbar sein, ohne eine Trübung zu erzeugen. Aus diesen Gründen sind teilveretherte Methylolmelamine besonders bevorzugt.

Die vorliegende Erfindung betrifft ein Verfahren zur Herstellung der Mikrokapseln mit einem wasserlösliche, organische Substanzen enthaltenden Kapselkern und einer Kapselhülle, indem man Formaldehydharze in der hydrophilen Phase einer Wasser-in-Öl-Emulsion in Gegenwart eines Schutzkolloids kondensiert, welche im Wortlaut des unabhängigen Anspruchs 1 beschrieben ist.

Um eine stabile Wasser-in-Öl-Emulsion zu erhalten, benötigt man oberflächenaktive Substanzen wie Schutzkolloide. Solche Schutzkolloide kennt man von Verfahren zur inversen Suspensionspolymerisation, vgl. DE-A-1081228 und DE-A-3709921. In der Regel verwendet man Schutzkolloide, die sich in der hydrophoben Phase lösen.

Hydrophobe Schutzkolloide sind alkylierte Polyvinylpyrrolidone, Ethylenoxid/Propylenoxid Copolymer und ethoxylierte Fettalkohole (EO-Grad = 3 bis 50, Alkylrest: C₈ bis C₃₆) sind im Stand der Technik beschrieben.

Weitere hydrophobe Schutzkolloide auf Basis von Copolymeren monoethylenisch ungesättigter Carbonsäuren mit monovinylaromatischen Comonomeren, z.B. Styrol, Estern der (Meth)-Acrylsäure, Vinylacetat, Acrylamid, Methacrylamid, Acrylnitril und Hydroxyalkyl(meth)acrylaten werden auch in Stand der Technik beschrieben. In Anspruch 1 wird ein Verfahren beansprucht, wobei Schutzkolloide verwendet werden. Die Schutzkolloide sind erhältlich durch Pfropfen von Polymerisaten A) aus
a) 40 bis 95 Gew.-% monovinylaromatischen Monomeren,
b) 5 bis 60 Gew.-% monoethylenisch ungesättigten Carbonsäuren mit 3 bis 6 C-Atomen, Maleinsäureanhydrid und/oder Itaconsäureanhydrid und
c) 0 bis 20 Gew.-% anderen monoethylenisch ungesättigten Monomeren,
mit der Maßgabe, daß die Summe der Gewichtsprozente (a) bis (c) immer 100 beträgt und die Polymerisate A) ein Molekulargewicht (Zahlenmittel) von 500 bis 20000 aufweisen, mit Monomermischungen aus
a) 70 bis 100 Gew.-% Acrylsäureester und/oder Methacrylsäureester von 1 bis 20 C-Atome enthaltenden einwertigen Alkoholen,
b) 0 bis 15 Gew.-% monoethylenisch ungesättigten Carbonsäuren mit 3 bis 6 C-Atomen, Maleinsäureanhydrid und/oder Itaconsäureanhydrid,
c) 0 bis 10 Gew.-% Acrylsäuremonoester und/oder Methacrylsäuremonoester von mindestens zweiwertigen Alkoholen,
d) 0 bis 15 Gew.-% monovinylaromatischen Monomeren und
e) 0 bis 7,5 Gew.-% Acrylamid und/oder Methacrylamid mit der Maßgabe, daß die Summe der Gewichtsprozente a) bis e) immer 100 beträgt,
wobei die Monomeren in einer Menge von 97,5 bis 50 Gew.-%, bezogen auf die Mischung aus Polymerisat A) und Monomeren.

Solche Pfropfpolymerisate sowie Verfahren zu ihrer Herstellung sind aus der DE-A-3709921 bekannt.

Bei den Polymerisaten A) handelt es sich um Copolymerisate der monovinylaromatischen Monomeren mit einer ethylenisch ungesättigten Carbonsäure oder einem Anhydrid einer monoethylenisch ungesättigten Carbonsäure.

Als Komponente a) der Polymerisate A) kommen monovinylaromatische Monomere in Betracht, z.B. Styrol, α-Methylstyrol, α-Alkylstyrole mit 2 bis 6 C-Atomen im Alkylrest, der geradkettig und/oder verzweigt sein kann, z.B. α-Iso-Butylstyrol. Daneben eignen sich Vinylaromaten, die außer der Vinylgruppierung am aromatischen Kern eine C₁- bis C₈-Alkylgruppe tragen, z.B. Vinyltoluol, tert.-Butylstyrol, Halogenstyrole, kern(alkyl)substituierte α-Alkylstyrole mit 1 bis 8 C-Atomen im Kernalkylrest und mit 1 bis 6 C-Atomen im α-Alkylrest, z.B. para-tert.-Butyl-α-Methylstyrol. Vorzugsweise verwendet man aus dieser Monomerengruppe Styrol. Die Komponenten a) insbesondere Styrol sind bevorzugt zu 60 bis 95 Gew.-% am Aufbau des Polymerisates A) beteiligt.

Zu den Monomeren der Gruppe b) gehören monoethylenisch ungesättigte Carbonsäuren mit 3 bis 6 C-Atomen und/oder deren Anhydride, z.B. Acrylsäure, Methacrylsäure, Ethacrylsäure, Maleinsäure, Fumarsäure, Itaconsäure, Maleinsäureanhydrid, Itaconsäureanhydrid, Vinylmilchsäure, Vinylphosphonsäure und Vinylsulfonsäure. Diese Monomeren werden entweder allein oder in Mischung eingesetzt. Vorzugsweise verwendet man aus dieser Gruppe von Monomeren Acrylsäure, Methacrylsäure, Maleinsäureanhydrid und Itaconsäureanhydrid. Die Monomeren dieser Gruppe sind bevorzugt zu 5 bis 40 Gew.-% am Aufbau der Polymerisate A) beteiligt.

Außer den Monomeren der Gruppen a) und b) können noch gegebenenfalls bis zu 20 Gew.-% andere monoethylenisch ungesättigte Monomere in den Polymerisaten A) in polymerisierter Form enthalten sein. Zu dieser Gruppe von Monomeren gehören beispielsweise die Ester der Acrylsäure, Methacrylsäure und/oder Ethacrylsäure, die sich von Alkoholen mit 1 bis 12 C-Atomen ableiten, z.B. Methylacrylat, Methylmethacrylat, tert.-Butylcyclohexylacrylat, tert.-Butylcyclohexylmethacrylat, Cyclohexylacrylat, Cyclohexylmethacrylat, tert.-Butylacrylat, tert.-Butylmethacrylat, n-Butylacrylat, n-Butylmethacrylat, Isobutylacrylat, Isobutylmethacrylat, 2-Ethylhexylacrylat, 2-Ethylhexylmethacrylat sowie Vinylester von gesättigten aliphatischen Carbonsäuren, die 2 bis 10 C-Atome enthalten, z.B. Vinylacetat, Vinylpropionat, Vinyllaurat, Vinylbutyrat und Vinylstearat. Eine andere Gruppe von Monomeren sind die Amide von Methacrylsäure, Acrylsäure und Ethacrylsäure. Hierbei kann es sich beispielsweise um Methacrylamid oder Acrylamid sowie um N-substituierte Amide, wie Methacrylsäure-N-tert.-butylamid oder Acrylsäure-N-tert.-butylamid handeln. Eine weitere Klasse von Monomeren, die gegebenenfalls am Aufbau des Polymerisats A) beteiligt sind, sind Acrylnitril und Methacrylnitril. Die Monomeren der Gruppe der c) können entweder allein oder in Mischung in Mengen bis zu 20 Gew.-% im Copolymerisat A) einpolymerisiert sein. Die Summe der Angaben in Prozent a), b) und c) beträgt jeweils 100.

Die Polymerisate A) haben ein Molekulargewicht (Zahlenmittel) von 500 bis 20000 und Hydrierjodzahlen (nach DIN 53241) von 1,3 bis 51, vorzugsweise 2,5 bis 25,4. Es ist besonders bevorzugt, Polymerisate A) zu verwenden, deren Hydrierjodzahlen 5,1 bis 16,9 betragen. Das mittlere Molekulargewicht (Zahlenmittel) der Polymerisate A) beträgt vorzugsweise 1000 bis 10000. Vorzugsweise werden solche Polymerisate A) eingesetzt, die in aliphatischen Kohlenwasserstoffen eines Siedebereichs von 50 bis 150°C schwer löslich sind.

Solche Polymerisate sind bekannt. Sie werden beispielsweise durch Homo- oder Copolymerisation der Monomeren a) bis c) in Substanz bei 180 bis 400, vorzugsweise 200 bis 300°C hergestellt. Besonders bevorzugt ist die kontinuierliche Substanzpolymerisation der Monomeren, die in dem angegebenen Temperaturbereich und insbesondere bei 200 bis 260°C und Drücken von 1 bis 100, vorzugsweise 20 bis 50 bar in Abwesenheit von Polymerisationsinitiatoren oder auch in Gegenwart von Polymerisationsinitiatoren und Polymerisationsinhibitoren durchgeführt wird. Solche Verfahren sind z.B. in der DE-A-3026831, DE-A-3046476, US-A-4042768 und WO 82/2387 beschrieben.

Die Polymerisate A) dienen als Pfropfgrundlage für die Herstellung der Schutzkolloide. Zur Herstellung der Pfropfpolymerisate verfährt man im allgemeinen so, daß man zu einer Lösung oder Dispersion der Polymeren A) in einem aliphatischen und/oder aromatischen Kohlenwasserstoff - vorzugsweise verwendet man diejenigen Lösemittel, die anschließend bei der Herstellung der Mikrokapseln als hydrophobe inerte Lösungsmittel verwendet werden - einen Teil des Polymerisationsinitiators und einen Teil der Monomermischung zugibt und auf eine höhere Temperatur erhitzt und nach dem Beginn der Polymerisation die restlichen Monomeren und den Polymerisationsinitiator zugibt.

Als Monomere der Gruppe a) verwendet man Acrylsäureester und/oder Methacrylsäureester von einwertigen 1 bis 20 C-Atomen enthaltenden Alkoholen. Beispiele für diese Gruppe von Monomeren sind Methylacrylat, Methylmethacrylat, Ethylacrylat, Ethylmethacrylat, Propylacrylat, Isopropylacrylat, Propylmethacrylat, n-Butylacrylat, sec.-Butylacrylat, tert.-Butylacrylat, tert.-Butylmethacrylat, sek.-Butylmethacrylat, n-Butylmethacrylat, tert.-Butylcyclohexylacrylat, tert.-Butylcyclohexylmethacrylat, Cyclohexylacrylat, 2-Ethylhexylacrylat, 2-Ethylhexylmethacrylat und Laurylacrylat. Außerdem können die Ester der Ethacrylsäure verwendet werden, die sich von einwertigen Alkoholen mit 1 bis 12 C-Atomen ableiten. Vorzugsweise verwendet man aus dieser Gruppe von Monomeren Acrylsäureester und/oder Methacrylsäureester von einwertigen, 3 bis 6 C-Atome enthaltenden Alkoholen. Ganz besonders bevorzugt ist der Einsatz von tert.-Butylacrylat, n-Butylacrylat und Isobutylacrylat oder deren Gemische in einer Menge von 85 bis 98 Gew.-%, bezogen auf die Monomerenmischung, die auf das Polymerisat A) aufgepfropft wird. Die Monomere der Gruppe a) werden im allgemeinen in einer Menge von 70 bis 100 Gew.-%, bezogen auf die aufzupfropfenden Monomere, eingesetzt. Bei einer nur geringfügigen Modifizierung beträgt die Menge an Monomeren der Gruppe a) 92,5 bis 100 Gew.-%.

Als Monomere der Gruppe b) kommen monoethylenisch ungesättigte Carbonsäuren mit 3 bis 6 C-Atomen und/oder deren Anhydride in Betracht. Diese Gruppe von Monomeren entspricht den Monomeren der Gruppe b) der Polymerisate A). Es handelt sich im einzelnen hierbei beispielsweise um Acrylsäure, Methacrylsäure, Ethacrylsäure, Fumarsäure, die Anhydride der genannten Carbonsäuren und Maleinsäureanhydrid. Diese Gruppe von Monomeren wird gegebenenfalls bei der Herstellung der Pfropfpolymerisate mitverwendet und ist zu 0 bis 15 Gew.-% in der Monomerenmischung, die auf das Polymerisat A) aufgepfropft wird, vorhanden. Vorzugsweise verwendet man aus dieser Gruppe von Monomeren Acrylsäure, Methacrylsäure, Maleinsäureanhydrid oder Itaconsäureanhydrid in einer Menge von 0 bis 7,5 Gew.-%, bezogen auf die Monomeren.

Als weitere Gruppe von Monomeren, die auf das Polymerisat A) aufgepfropft werden können, sind Acrylsäuremonoester und/oder Methacrylsäuremonoester von mindestens zweiwertigen Alkoholen zu nennen. Hierzu gehören beispielsweise Hydroxyethylacrylat, Hydroxyethylmethacrylat, Hydroxypropylacrylat, Hydroxypropylmethacrylat, Hydroxybutylacrylat und Hydroxybutylmethacrylat. Diese Gruppe von Monomeren wird gegebenenfalls bis zu 10 Gew.-% in einer Monomermischung mitverwendet.

Eine weitere Modifizierung der Polymerisate A) kann durch Aufpfropfen von Monomeren der Gruppe d) erfolgen. Zu diesen Monomeren gehören monovinylaromatische Verbindungen, die in einer Menge bis zu 15 Gew.-%, vorzugsweise 1 bis 7,5 Gew.-% in der Monomermischung enthalten sein können. Diese Monomeren sind identisch mit den Monomeren der Gruppe a) der Polymerisate A). Vorzugsweise wird aus dieser Gruppe von Monomeren Styrol verwendet.

Eine weitere Modifizierung kann dadurch erfolgen, daß die Mischung der Monomeren, die auf die Polymerisate A) aufgepfropft werden, als Monomere e) gegebenenfalls bis zu 7,5 Gew.-% Acrylamid und/oder Methacrylamid enthält.

Die Summe der Gewichtsprozente der Monomeren der Gruppe a) bis e) beträgt immer 100. Die Monomeren a) bis e) werden in einer Menge von 97,5 bis 50 Gew.-%, vorzugsweise 90 bis 75, bezogen auf die Mischung aus Polymerisat A) und den Monomeren a) bis e), zur Herstellung der Pfropfpolymerisate eingesetzt.

Die Pfropfpolymerisation erfolgt im allgemeinen bei Temperaturen bis zu 50°C, bevorzugt von 50 bis 150, vorzugsweise 60 bis 120°C in Gegenwart von Polymerisationsinitiatoren, die im allgemeinen in einer Menge von 0,01 bis 6, vorzugsweise 0,1 bis 4 Gew.-%, bezogen auf das Gewicht der Polymeren A) und der Monomermischung eingesetzt werden. Die Pfropfpolymerisation kann bei Normaldruck, sowie bei erhöhtem oder vermindertem Druck durchgeführt werden.

Polymerisationsinitiatoren für die Pfropfpolymerisation sind bekannt und sind beispielsweise der DE-A-3709921 zu entnehmen.

Der K-Wert nach Fikentscher (Cellulose Chemie, Bd. 13, 48-64 und 71-74 (1932)) bei 25°C in 1 gew.-%iger Lösung in Tetrahydrofuran, der als Schutzkolloide anzuwendenden Pfropfcopolymerisate beträgt 25 bis 100, vorzugsweise 34 bis 65.

Die optimale Menge an Schutzkolloid wird einmal vom Schutzkolloid selbst, zum anderen von der Reaktionstemperatur, der gewünschten Mikrokapselgröße und der Formaldehydharzmischung beeinflußt. Durch einfache Reihenversuche kann die optimal benötigte Menge leicht ermittelt werden. In der Regel wird das Schutzkolloid zur Herstellung der Wasser-in-Öl-Emulsion in einer Menge von 5 bis 30 Gew.-% bezogen auf die hydrophobe Phase angewendet.

Das erfindungsgemässe Verfahren zur Herstellung der Mikrokapseln wird im allgemeinen so durchgeführt, dass man eine die wasserlösliche, organische Substanz und das Formaldehydharz und/oder dessen Alkylether enthaltende Mischung mit dem hydrophilen Lösungsmittel im hydrophoben das Schutzkolloid enthaltende Lösungsmittel zu feinen Tröpfchen emulgiert, wobei die Tropfengröße, je nach dem vorgesehenen Anwendungszweck, eingestellt werden kann.

Die Kondensation des Formaldehydharzes wird sauer katalysiert und durch Temperaturerhöhung beschleunigt. Im allgemeinen wird die Kondensation im Temperaturbereich von 40 bis 150°C durchgeführt. In der Regel wählt man einen pH-Wert des wässrigen Lösungsmittel im Bereich von 3 bis 6,5. Während der Bildung der Wasser-in-Öl-Emulsion beträgt die Temperatur üblicherweise 20 bis 45°C. In diesem Temperaturbereich verläuft die Polykondensation nicht oder nur sehr langsam. Die Kapselhülle wird anschließend durch Erhöhung der Temperatur ausgehärtet. Je nach pH-Wert der Dispersion erfolgt die Härtung unterschiedlich rasch. Im pH-Bereich von 3 bis 5 erfolgt die Polykondensation bevorzugt bei Temperaturen bis 100°C, insbesondere 85°C. In einer bevorzugten Ausführungsform steigert man die Temperatur kontinuierlich oder stufenweise beginnend bei 40°C auf 100°C, bevorzugt auf 85°C. Gegebenenfalls erwärmt man anschließend auf Temperaturen bis 150°C, um eine Nachvernetzung zu erzielen. Die optimalen Temperaturen, abhängig vom pH-Wert, können durch einfache Reihenversuche leicht ermittelt werden.

Der pH-Wert in der wässrigen Phase kann mit Säuren, vorzugsweise mit Ameisensäure eingestellt werden.

Die Dispergierung des Kernmaterials erfolgt, je nach der Größe der herzustellenden Kapseln, in bekannter Weise. Für die Herstellung großer Kapseln reicht die Dispergierung unter Verwendung von wirksamen Rührern, insbesondere von Propeller- oder Impellerrührern aus. Kleine Kapseln, insbesondere wenn die Größe unterhalb von 50 µm liegen soll, erfordern Homogenisier- oder Dispergiermaschinen, wobei diese Geräte mit oder ohne Zwangsdurchlaufvorrichtung versehen sein können.

Die Homogenisierung kann ferner durch die Anwendung von Ultraschall (z.B. Branson Sonifier II 450) erfolgen. Für die Homogenisierung mittels Ultraschall sind beispielsweise die in der GB 2250930 und US 5,108,654 beschriebenen Vorrichtungen geeignet.

Die Kapselgröße kann über die Tourenzahl des Dispergiergerätes/Homogenisiergerätes und/oder mit Hilfe der Konzentration des Sulfonsäuregruppen tragenden Polymeren bzw. über dessen Molekulargewicht, d. h. über die Viskosität der wäßrigen kontinuierlichen Phase innerhalb gewisser Grenzen gesteuert werden. Dabei nimmt mit Erhöhung der Tourenzahl bis zu einer Grenztourenzahl die Größe der dispergierten Teilchen ab.

Dabei ist es wichtig, daß die Dispergiergeräte zu Beginn der Kapselbildung angewendet werden. Bei kontinuierlich arbeitenden Geräten mit Zwangsdurchlauf ist es vorteilhaft, die Emulsion mehrmals durch das Scherfeld zu schicken.

Die für den Einzelfall optimalen Bedingungen, wie Temperatur, pH-Wert und Rührergeschwindigkeit können anhand von einigen Versuchen leicht ermittelt werden.

Nach dem erfindungsgemäßen Verfahren können Mikrokapseldispersionen mit einem Gehalt von 15 bis 60 Gew.-% an Mikrokapseln hergestellt werden. Die Mikrokapseln sind Einzelkapseln. Durch geeignete Bedingungen bei der Dispergierung können Kapseln mit einer mittleren Teilchengröße im Bereich von 0,5 bis zu 50 µm und größer hergestellt werden. Bevorzugt werden Kapseln mit einer mittleren Teilchengröße von 0,5 bis 50 µm, insbesondere bis 30 µm. Bei dem mittleren Teilchendurchmesser handelt es sich um den z-mittleren Teilchendurchmesser, bestimmt durch quasielastische, dynamische Lichtstreuung. Üblicherweise verwendet man zu seiner Bestimmung einen Coulter N4 Plus Particle Analyzer der Fa. Coulter Scientific Instruments. Besonders vorteilhaft ist die sehr enge Größenverteilung der Kapseln.

Die Kapseldispersionen sind trotz der hohen Konzentration an Kapseln sehr niederviskos und deshalb auch durch Maschensiebe von 25 bis 40 µm Maschenweite rasch filtrierbar. Bei der Filtration zeigt sich, daß die Ausbeute an Mikrokapseln bei dem erfindungsgemäßen Verfahren sehr hoch ist.

Die erhaltene Kapseldispersion kann direkt weiterverarbeitet werden. Beispielsweise kann sie in Kunststoffformmassen eingearbeitet werden.

Die Mikrokapseln Können ferner als Pulver eingesetzt werden. Die Herstellung erfolgt in der Regel durch Sprühtrocknung, gegebenenfalls in Gegenwart von Sprühhilfsmitteln, in einem Warmluftstrom oder durch Gefriertrocknung. Verfahren zur Sprühtrocknung und zur Gefriertrocknung sind dem Fachmann dem Prinzip nach bekannt und können auf die Trocknung der vorstehend beschriebenen Mikrokapseldispersion übertragen werden.

Bei einer Sprühtrocknung wird beispielsweise so vorgegangen, dass man die zu trocknenden Mikrokapseldispersionen in einem üblichen Trockenturm in einem Warmluftstrom versprüht. Hierbei liegt die Eingangstemperatur des Warmluftstroms im Bereich von 100 bis 200 °C, vorzugsweise 120 bis 160 °C, und die Ausgangstemperatur des Warmluftstroms im Bereich von 30 bis 90 °C und vorzugsweise 60 bis 80 °C. Das Versprühen der Mikrokapseldispersion im Warmluftstrom kann beispielsweise mittels Ein- oder Mehrstoffdüsen oder über eine rotierende Scheibe erfolgen. Die Abscheidung der Mikrokapselpulver erfolgt normalerweise unter Verwendung von Zyklonen oder Filterabscheidern. Die versprühte Mikrokapseldispersion und der Warmluftstrom werden vorzugsweise parallel geführt.

Als Sprühhilfsmittel, die auch als Trocknungshilfsmittel bezeichnet werden, kommen sowohl neutrale, kationische, anionische oder amphotere, wasserlösliche Polymere in Betracht. Diese haben in der Regel ein Molekulargewicht M_{N} im Bereich von 1 000 bis 1 000 000, vorzugsweise 2 000 bis 100 000.

Konkrete Beispiele für neutrale Polymere sind: Polyvinylalkohole (siehe z. B. EP-A-56 622, EP-A-680 993, DE-A-22 14 410 und DE-A-26 14 261), Polyvinylpyrrolidone (siehe z. B. DE 22 38 903 und EP 576 844). Beispiele für anionische Polymere sind Phenolsulfonsäure-Formaldehyd-Kondensate (siehe z. B. EP-A 407 889, WO 98/03576), Naphthalinsulfonsäure-Formaldehyd-Kondensate (siehe z. B. WO 98/03577), Homo- und Copolymerisate der 2-Acrylamido-2-methylpropansulfonsäure (siehe z. B. EP-A 629 650, EP-A 671 435 und DE-A 195 39 460), Copolymere ethylenisch ungesättigter Carbonsäuren, wie insbesondere Acrylsäure, Methacrylsäure und Maleinsäure, mit hydrophoben Comonomeren wie Styrol (siehe z. B. EP 467 103) oder Olefinen (siehe z. B. EP 9 169) oder mit Hydroxyalkylestern (siehe z. B. JP 59 162 161). Beispiele für kationische Polymere sind Copolymere und Terpolymere des Vinylpyrrolidons und/oder des Vinylcaprolactams mit 1-Vinyl-3-alkylimidazolinium-Salzen, z. B. mit 1-Vinyl-3-methylimidazoliniumchlorid oder -methosulfat; Copolymere und Terpolymere des Vinylpyrrolidons und/oder des Vinylcaprolactams mit (Meth)acryloyloxyethyltrialkylammoniumsalzen oder mit (Meth)acryloyloxyethylammoniumsalzen. Derartige kationische Polymere sind dem Fachmann bekannt und im Handel erhältlich.

Geeignete amphotere Polymere sind Copolymere der Acrylsäure und gegebenenfalls hydrophober Monomere, wie Styrol und gegebenenfalls wasserlöslicher, neutraler Monomere mit kationischen Monomeren, z. B. Copolymere der Acrylsäure mit Styrol und mit (Meth)acryloxyethyltrialkylammoniumsalzen sowie gegebenenfalls mit weiteren Comonomeren, wie (Meth)acrylamid und Acetonitril. Derartige Copolymere sind beispielsweise aus der EP-A 51 144 bekannt.

Bevorzugt erfolgt die Sprühtrocknung ohne Sprühhilfsmittel.

Die erhaltenen farbstoffhaltigen Mikrokapseldispersionen sowie die Mikrokapselpulver zeichnen sich durch eine hohe Brillianz aus. Sie eignen sich insbesondere zur Einarbeitung in unpolare Medien, beispielsweise als farbgebende Komponente in Druckfarben, Alkylharzlacken, z.B. Melamin-Alkylharz-Einbrennlakken oder zur Anfärbung von Kunststofffasern oder Kunststoffmassen.

Die erhaltenen farbstoffhaltigen Mikrokapseldispersionen sowie die daraus erhältlichen farbstoffhaltigen Mikrokapselpulver zeichnen sich auch nach Einarbeitung in hochmolekulare Anwendungsmedien wie Lacke, Druckfarben, Kunststoffe oder anorganische Materialien durch hohe Farbstärke und große Brillanz sowie eine gute Transparenz aus. Eine Abhängigkeit des Farbtons von der Mikrokapselteilchengröße ist im Unterschied zu konventionellen Pigmenten nicht zu beobachten. Darüber hinaus weisen die erhaltenen Mikrokapseldispersionen im Unterschied zu konventionellen Pigmenten keine Formanisotropie und damit einhergehende Rheologieprobleme sowie eine enge Teilchengrößenverteilung auf. Zudem ist die mittlere Teilchengröße über die Teilchengröße der Emulsionströpfchen in leichter Weise einstellbar. Darüber hinaus zeichnen sich die erhaltenen Mikrokapseldispersionen gegenüber konventionellen Pigmenten durch einen sehr viel geringeren Bedarf an teurem Chromophor zur Erzielung des gleichen Farbeindrucks aus. Außerdem sind die Farbstoffe in der Mikrokapsel besser gegen ein Ausbleichen als Folge der Einwirkung von UV-Strahlung oder Sauerstoff geschützt als konventionelle Farbstoffe oder Pigmente. Substrate, die mit den optische Aufheller enthaltenden Mikrokapseldispersionen behandelt werden, zeigen eine geringere Neigung zum Vergilben, insbesondere bei Belastung mit UV-Strahlung oder bei Einwirkung erhöhter Temperatur. Zudem wird bei Einsatz derartiger Mikrokapseldispersionen im Vergleich zu konventionellen optischen Aufhellern ein vergleichbarer Weißgrad bereits bei geringeren Mengen an optischem Aufheller erreicht. Mikrokapseldispersionen, die optische Aufheller enthalten, sind insbesondere als aufhellender Bestandteil in Papierstreichfarben geeignet. Sie können außerdem als aufhellender Bestandteil zur Verbesserung des Weißgrads den Papiermassen selber zugesetzt werden.

Die im Folgenden angegebenen Beispiele sollen die vorliegende Erfindung näher erläutern.

### Beispiel 1

In einem zylindrisch geformten 2-1 Rührgefäß wurden mit einem Dispergator (®Turrax 45 N, der Fa. Jahnke & Kunkel) in einer Lösung von 75 g Schutzkolloid D (beschrieben in DE-A 3709921, S. 10) in 548 g Cyclohexan, 16,4 g eines orangen Farbstoffs, gelöst in einer mit Ameisensäure auf pH 4,5 gestellten klaren, wässrigen Lösung von 115 g partiell methylierten Vorkondensates (enthält 2,3 CH₃O-Gruppen pro Melaminmolekül) aus 1 Mol Melamin und 5,25 Mol Formaldehyd in 229 g Ethylenglycol und 63,45 g Wasser (70:30) mit einer Umdrehungsgeschwindigkeit von 8000 U/min dispergiert. Die erhaltene Emulsion wurde bei einer Rührgeschwindigkeit von 1000 U/min auf 60°C erhitzt. Nach 120 min wurde die Temperatur auf 70°C gesteigert. Nach weiteren 90 min wurde die Dispersion auf Raumtemperatur abgekühlt.

Die erhaltene Dispersion war orange milchig und enthielt nach der mikroskopischen Beurteilung Einzelkapseln von vorwiegend 1 bis 5 µm Durchmesser. Die Viskosität betrug 4,02 mPas bei einer Schergeschwindigkeit von 250 1/s und einem Feststoffgehalt von 38,5 Gew.-%.

### Beispiel 2

Es wurde eine Mikrokapseldispersion nach Beispiel 1 hergestellt. Als Farbstoff wurden 16,4 eines grünen Farbstoffs eingesetzt. Der Farbstoff wurde zusammen mit 115 g partiell methyliertem Vorkondensat in 292 g Wasser, das mit Ameisensäure auf pH 4,5 gestellt wurde, gelöst. Die erhaltene Dispersion war milchig grün und enthielt nach der mikrokopischen Beurteilung Einzelkapseln von vorwiegend 1 bis 5 µm Durchmesser. Die Viskosität betrug 8,04 mPas bei einer Schergeschwindigkeit von 250 1/s und einem Feststoffgehalt von 38,5 Gew.-%.

Die angegebenen Viskositäten (mPas) wurden gemäß ISO 3219 (DIN 53019) mit dem Viskosimeter Physica MC20 im Meßsystem Z1 ermittelt. Der Kapseldurchmesser wurde optisch bei 400-facher Vergrößerung mit einem Mikrokop der Firma Leitz (Diaplan 101/107) bestimmt.

### Beispiel 3

200 g der Dispersion aus Beispiel 1 wurde in einem Laborsprühtrockner (#190 der Fa. Büchi) bei 70°C und einer Förderleistung von 300 g/h getrocknet. Man erhielt 61 g eines orange gefärbten Pulvers.

Zur Überprüfung der Kapselqualität wurde 5 g Mikrokapselpulver in 100 ml Wasser bei einer Rührgeschwindigkeit von 200 U/min dispergiert und 90 min bei 20°C gerührt. Nach Absedimentieren des Pulvers ist keine Einfärbung des Wassers erkennbar.

### Beispiel 4

Es wurde ein Pulver aus der in Beispiel 2 beschriebenen Dispersion analog Beispiel 3 hergestellt. Aus 200 g Dispersion wurden 58 g eines grünen Pulvers erhalten. Die Überprüfung analog Beispiel 3 auf Dichtigkeit gegenüber Wasser ergab nach Absedimentieren des grünen Pulvers ebenfalls keine erkennbare Einfärbung des Wassers.

## Patentansprüche

1. Verfahren zur Herstellung von Mikrokapseln mit einem wasserlösliche, organische Substanzen enthaltenden Kapselkern und einer Kapselhülle, die ein Kondensat aus Formaldehydharzen und/oder deren Alkylethern ist, durch Kondensation von Formaldehydharzen in der hydrophilen Phase einer Wasser-in-Öl-Emulsion in Gegenwart eines Schutzkolloids, **dadurch gekennzeichnet, dass** das Schutzkolloid ein Pfropfpolymerisat ist, das erhältlich ist durch Pfropfen von Polymerisaten (A) aus
a) 40 bis 95 Gew.-% monovinylaromatischen Monomeren,
b) 5 bis 60 Gew.-% monoethylenisch ungesättigten Carbonsäuren mit 3 bis 6 C-Atomen, Maleinsäureanhydrid und/oder Itaconsäureanhydrid und
c) 0 bis 20 Gew.-% anderen monoethylenisch ungesättigten Monomeren,
mit der Maßgabe, daß die Summe der Gewichtsprozente (a) bis (c) immer 100 beträgt und die Polymerisate A) ein Molekulargewicht (Zahlenmittel) von 500 bis 20000 aufweisen mit Monomermischungen aus
a) 70 bis 100 Gew.-% Acrylsäureester und/oder Methacrylsäureester von 1 bis 20 C-Atome enthaltenden einwertigen Alkoholen,
b) 0 bis 15 Gew.-% monoethylenisch ungesättigten Carbonsäuren mit 3 bis 6 C-Atomen, Maleinsäureanhydrid und/oder Itaconsäureanhydrid,
c) 0 bis 10 Gew.-% Acrylsäuremonoester und/oder Methacrylsäuremonoester von mindestens zweiwertigen Alkoholen,
d) 0 bis 15 Gew.-% monovinylaromatischen Monomeren und
e) 0 bis 7,5 Gew.-% Acrylamid und/oder Methacrylamid mit der Maßgabe, daß die Summe der Gewichtsprozente a) bis e) immer 100 beträgt,
wobei die Monomeren in einer Menge von 50 bis 97,5 Gew.-%, bezogen auf die Mischung aus Polymerisat A) und Monomeren, eingesetzt werden.

2. Verfahren zur Herstellung von Mikrokapseln nach Anspruch 1, **dadurch gekennzeichnet, dass** die Kapselhülle ein Kondensat aus Melamin-Formaldehyd-Harzen und/oder deren Methylethern ist.

3. Verfahren zur Herstellung von Mikrokapseln nach Anspruch 1 oder 2, **dadurch gekennzeichnet, dass** der Kapselkern als wasserlösliche, organische Substanzen wasserlösliche Farbstoffe enthält.

4. Verfahren zur Herstellung von Mikrokapseln nach den Ansprüchen 1 bis 3, **dadurch gekennzeichnet, dass** ihre mittlere Teilchengröße 0,5 bis 50 µm ist.

5. Verfahren zur Herstellung von Mikrokapseln nach den Ansprüchen 1 bis 4, **dadurch gekennzeichnet, dass** die Kondensation im Temperaturbereich von 40 bis 150°C durchgeführt wird.

## Claims

1. A process for the preparation of microcapsules having a capsule core comprising water-soluble organic substances, and a capsule coating which is a condensate of formaldehyde resins and/or alkyl ethers thereof, by condensing formaldehyde resins in the hydrophilic phase of a water-in-oil emulsion in the presence of a protective colloid wherein the protective colloid is a graft polymer obtainable by grafting polymers (A) comprising.
a) 40 to 95% by weight of monovinylaromatic monomers,
b) 5 to 60% by weight of monoethylenically unsaturated carboxylic acids having 3 to 6 carbon atoms, maleic anhydride and/or itaconic anhydride and
c) 0 to 20% by weight of other monoethylenically unsaturated monomers,
with the proviso that the sum of the percentages by weight (a) to (c) is always 100 and the polymers A) have a molecular weight (number-average) of from 500 to 20 000, with monomer mixtures of
a) 70 to 100% by weight of acrylic esters and/or methacrylic esters of monohydric alcohols comprising 1 to 20 carbon atoms,
b) 0 to 15% by weight of monoethylenically unsaturated carboxylic acids having 3 to 6 carbon atoms, maleic anhydride and/or itaconic anhydride,
c) 0 to 10% by weight of acrylic monoesters and/or methacrylic monoesters of at least dihydric alcohols,
d) 0 to 15% by weight of monovinylaromatic monomers and
e) 0 to 7.5% by weight of acrylamide and/or methacrylamide with the proviso that the sum of the percentages by weight a) to e) is always 100,
where the monomers are used in an amount of from 50 to 97.5% by weight, based on the mixture of polymer A) and monomers.

2. The process for the preparation of microcapsules according to claim 1, wherein the capsule coating is a condensate of melamine-formaldehyde resins and/or methyl ethers thereof.

3. The process for the preparation of microcapsules according to claim 1 or 2, wherein the capsule core comprises water-soluble dyes as water-soluble organic substances.

4. The process for the preparation of microcapsules according to claims 1 to 3, wherein its average particle size is 0.5 to 50 µm.

5. The process for the preparation of microcapsules according to claims 1 to 4, wherein the condensation is carried out in the temperature range from 40 to 150°C.

## Revendications

1. Procédé de préparation de microcapsules comportant un noyau de capsule contenant des substances organiques solubles dans l'eau et une enveloppe de capsule qui est un produit de condensation à base de résines de formaldéhyde et/ou de leurs éthers alkyliques, par condensation de résines de formaldéhyde dans la phase hydrophile d'une émulsion eau-dans-huile, en présence d'un colloïde de protection, **caractérisé en ce que** le colloïde de protection est un polymère de greffage qui peut être obtenu par greffage de polymères (A) à base de
a) 40 à 95 % en poids de monomères monovinylaromatiques,
b) 5 à 60 % en poids d'acides carboxyliques monoéthyléniquement insaturés comportant 3 à 6 atomes de C, d'anhydride maléique et/ou d'anhydride itaconique, et
c) 0 à 20 % en poids d'autres monomères monoéthyléniquement insaturés,
à la condition que la somme des pour-cent en poids de a) à c) soit toujours de 100 et que les polymères A) présentent un poids moléculaire (moyenne numérique) de 500 à 20 000, avec des mélanges de monomères à base de
a) 70 à 100 % en poids d'ester acrylique et/ou d'ester méthacrylique de monoalcools contenant 1 à 20 atomes de C,
b) 0 à 15 % en poids d'acides carboxyliques monoéthyléniquement insaturés comportant 3 à 6 atomes de C, d'anhydride maléique et/ou d'anhydride itaconique,
c) 0 à 10 % en poids de monoester acrylique et/ou de monoester méthacrylique d'alcools au moins bivalents,
d) 0 à 15 % en poids de monomères monovinylaromatiques et
e) 0 à 7,5 % en poids d'acrylamide et/ou de méthacrylamide,
à la condition que la somme des pour-cent en poids de a) à e) soit toujours de 100, les monomères étant mis en oeuvre en une quantité de 50 à 97,5 % en poids par rapport au mélange du polymère A) et des monomères.

2. Procédé de préparation de microcapsules suivant la revendication 1, **caractérisé en ce que** l'enveloppe de capsule est un produit de condensation de résines de mélamine-formaldéhyde et/ou de leurs éthers méthyliques.

3. Procédé de préparation de microcapsules suivant la revendication 1 ou 2, **caractérisé en ce que** le noyau de capsule contient, comme substances organiques solubles dans l'eau, des colorants solubles dans l'eau.

4. Procédé de préparation de microcapsules suivant les revendications 1 à 3, **caractérisé en ce que** leur taille moyenne de particule est de 0,5 à 50 µm.

5. Procédé de préparation de microcapsules suivant les revendications 1 à 4, **caractérisé en ce que** la condensation est effectuée dans une gamme de températures de 40 à 150°C.
